# EUROPÄISCHE PATENTANMELDUNG

(11) **EP 2 365 580 A1**
(43) Veröffentlichungstag der Anmeldung: **14.09.2011**
(21) Anmeldenummer: 10002502.2
(22) Anmeldetag: 10.03.2010
(51) Int. Cl.: H01Q 1/12, F16B 2/24, E04H 12/22

(54) **Bausatz für einen Dachantennenhalter**

(71) Anmelder: Peres GmbH, 50827 Köln (DE)
(72) Erfinder: Peres, Karl-Heinz, Dipl.-Ing., 50737 Köln (DE)
(74) Vertreter: Grommes, Karl F.

(57) **Zusammenfassung**

Die Erfindung betrifft einen Bausatz für einen Dachantennenhalter mit einem auf zwei benachbarten Dachsparren (2) anbringbaren Tragteil (3, 3') sowie einem mit dem Tragteil (3., 3') zusammenwirkenden Aufnahmeteil (7) für das untere Ende eines Antennenmastes.

Die Erfindung hat sich jetzt die Aufgabe gestellt, einen Dachantennenhalter mit möglichst einfachen Bestandteilen vorzuschlagen, der als übersichtlicher und verständlicher Bausatz für eine einfache und bequeme schrittweise Montage angeboten werden kann.

Gelöst wird diese Aufgabe dadurch, dass das Aufnahmeteil (6) im mittleren Bereich (5) des Tragteils (3) im rechten Winkel dazu angeordnet und mit dem Tragteil (3) zu einer Baueinheit (2) starr verbunden ist und dass die beiden Endbereiche (4) der Baueinheit (2), welche als Tragteil (3) dienen, im Wesentlichen als Rohr oder Stange mit rundem Querschnitt ausgebildet sind, wobei ihnen als Befestigungsteile Schellen oder schellenartige Auflagerteile (7) zugeordnet sind, welche bei einer Lockerung eine Längsverschiebung und/oder Drehung der Baueinheit (2) zulassen.

## Beschreibung

### Technisches Gebiet

Die Erfindung betrifft einen Bausatz für einen Dachantennenhalter mit einem auf zwei benachbarten Dachsparren anbringbaren Tragteil sowie einem mit dem Tragteil zusammenwirkenden Aufnahmeteil für das untere Ende eines Antennenmastes.

Unter diese Gattung fallen eine Vielzahl von Bausätzen, nicht zuletzt weil sie je nach Ausbildung ihrer Grundbestandteile (Tragteil und Aufnahmeteil) eine Reihe weiterer Teile mit sich bringen können, um den nötigen Anschluss oder die notwendige Verbindung zu anderen Teilen funktionsgerecht und dauerhaft herzustellen.

So verlangt das Tragteil einerseits Befestigungsmittel oder -teile zur Sicherung an den Dachsparren, welche ggf. auch so ausgebildet sind, dass Korrekturen (Lageänderungen) noch möglich sind. Andererseits ist ein Zusammenwirken von Tragteil und Aufnahmeteil vorgesehen, wobei gerade in diesem Bereich die Materialien höchsten Beanspruchungen unterliegen. Entsprechend aufwendig müssen dabei die einzelnen Teile geformt und entsprechend sorgfältig die Materialien und Dimensionen gewählt und festgelegt werden.

Allgemein wird man sagen können, je mehr Grundbestandteile eingebracht werden, desto mehr Verbindungs-, Befestigungs- oder Lagerteile werden erforderlich. Und je komplizierter ein Grundbestandteil strukturiert ist, desto aufwendiger muss ein damit zusammenwirkendes Teil gestaltet werden. Und schließlich gilt, je mehr Teile insgesamt zusammenkommen, desto aufwendiger werden Herstellung, Lagerung, Transport und Montage. Trotz dieser negativen Folgen geht der Trend bisher dahin, Dachantennenhalter weiter zu differenzieren. Schließlich werden an ihn bestimmte Anforderungen gestellt. So soll er nicht zuletzt eine bisweilen beträchtliche Anpassung oder Ausrichtung in X-Y-Z-Richtung bei seiner Montage ermöglichen.

### Darstellung der Erfindung

Die Erfindung hat sich jetzt die Aufgabe gestellt, einen Dachantennenhalter mit möglichst einfachen Bestandteilen vorzuschlagen, der als übersichtlicher und verständlicher Bausatz für eine einfache und bequeme schrittweise Montage angeboten werden kann.

Gelöst wird diese Aufgabe mit den Merkmalen des Anspruchs 1 (= Hauptanspruch). Zweckmäßige Weiterbildungen geben die nachgeordneten Ansprüche (= Unteransprüche) an.

Nach dem Vorschlag der Erfindung sollen Tragteil und Aufnahmeteil eine starre Baueinheit bilden. Das hat zur Folge, dass eine Lageveränderung des Aufnahmeteils nur zusammen mit einer Lageveränderung des Tragteils möglich ist, was wiederum bedeutet, dass die bisher üblichen Relativbewegungen zwischen Aufnahmeteil und Tragteil, nämlich Längsverschiebung und Drehung in die Auflager des neuen Bauteils, nämlich der vorgeschlagenen Baueinheit verlagert werden.

Dementsprechend soll diese Baueinheit jetzt mit Befestigungs- oder Auflagerteilen zusammenwirken, welche bei entsprechender Lockerung eine Längsverschiebung der Baueinheit zulassen, ebenso wie eine Drehung. Dies ist z.B. mit Schellen oder schellenartigen Auflagerteilen möglich. Für die Baueinheit bedeutet die hier vorgeschlagene oder geforderte Längsverschiebung und Drehung, dass die als Tragteil dienenden Endbereiche zum einen über einen gewissen Überstand (über den Sparrenabstand hinaus) verfügen und zum anderen eine Querschnittsform aufweisen, welche eine Drehung - unter Bedingungen - zulässt.

Der besondere Vorteil dieses Vorschlages liegt zunächst darin, dass ein bislang kritischer, weil hochbelasteter und veränderlicher Verbindungsbereich in eine robuste starre Verbindung überführt wird. Gleichzeitig verringern sich damit die Bestandteile und vereinfacht sich deren Form. So kann die Baueinheit im mittleren Bereich einen beliebigen, darunter auch einen denkbar einfachen Querschnitt haben oder eine beliebige Oberfläche oder Oberflächenstruktur aufweisen. Dies alles wirkt sich auf den Aufwand für Herstellung, Lagerung, Transport und Montage günstig und letztlich kostensparend aus. Schließlich kann der gesamte Bausatz auf die neu vorgeschlagene Baueinheit sowie zwei Befestigungsteile (z.B. Schellen) und Kleinteile (Schrauben u. Ä.) reduziert werden.

Vorteilhaft ist das Aufnahmeteil außermittig am Tragteil, nämlich mit unterschiedlichem Abstand zu dessen Enden, angeordnet.

Zweckmäßigerweise ist das Aufnahmeteil an das Tragteil angeschweißt.

Nach einem anderen Vorschlag ist das Aufnahmeteil ein Zapfen, Rohrabschnitt oder Zylinder, mit dem eine Antenne mit ihrem unteren Ende verbindbar ist.

Bei einer Weiterbildung weist mindestens ein Endbereich der Baueinheit, welcher als Tragteil dient, eine in Längsrichtung verlaufende Riffelung, Rändelung oder Zahnung an der Außenseite auf und verfügt das zugeordnete Befestigungsteil über eine komplementäre Riffelung, Rändelung oder Zahnung an der Innenseite.

Vorteilhaft ist die Baueinheit hohl ausgebildet, wobei das Tragteil und das Aufnahmeteil an ihren Enden geschlossen sind.

Nach einem weiteren Vorschlag weisen die geschlossenen Enden der Baueinheit in etwa die Form von Kugelkalotten auf.

Die Abschlüsse können auch bombiert oder kegelförmig und im Übrigen stufenlos und ohne scharfe Kanten ausgeführt sein, was diese Ausführungsform - im Vergleich zu den bisherigen mehrteiligen Ausführungsformen - für die Handhabung wesentlich einfacher, bequemer und ungefährlicher macht.

Zweckmäßigerweise bestehen die Bestandteile des Bausatzes aus Metall-und sind verzinkt.

### Kurze Beschreibung der Zeichnung

Weitere Einzelheiten und Vorteile werden nachstehend in Verbindung mit der Zeichnung für zwei bevorzugte Ausführungsbeispiele beschrieben. Darin zeigen:
Fig. 1 einen aus einem erfindungsgemäßen Bausatz gebildeten Dachantennenhalter in schematischer Anordnung auf zwei benachbarten Dachsparren in Draufsicht;
Fig. 2 den Gegenstand von Fig. 1 in Vorderansicht;
Fig. 3 einen Schnitt durch den Gegenstand von Fig. 2 entlang der Linie III - III;
Fig. 4 ein Auflagerteil gemäß den Fig. 1 und 2 in Seitenansicht;
Fig. 5 eine Baueinheit mit einem außenmittig (links) auf dem Tragteil angeordneten Aufnahmeteil in Vorderansicht; und
Fig. 6 eine Baueinheit mit einem außermittig (rechts) auf einem Tragteil angeordneten Aufnahmeteil in Vorderansicht.

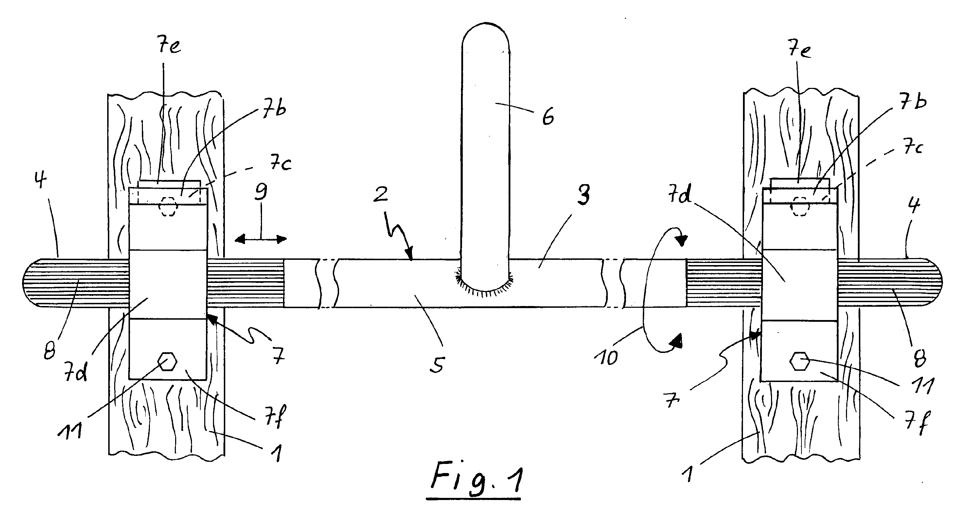

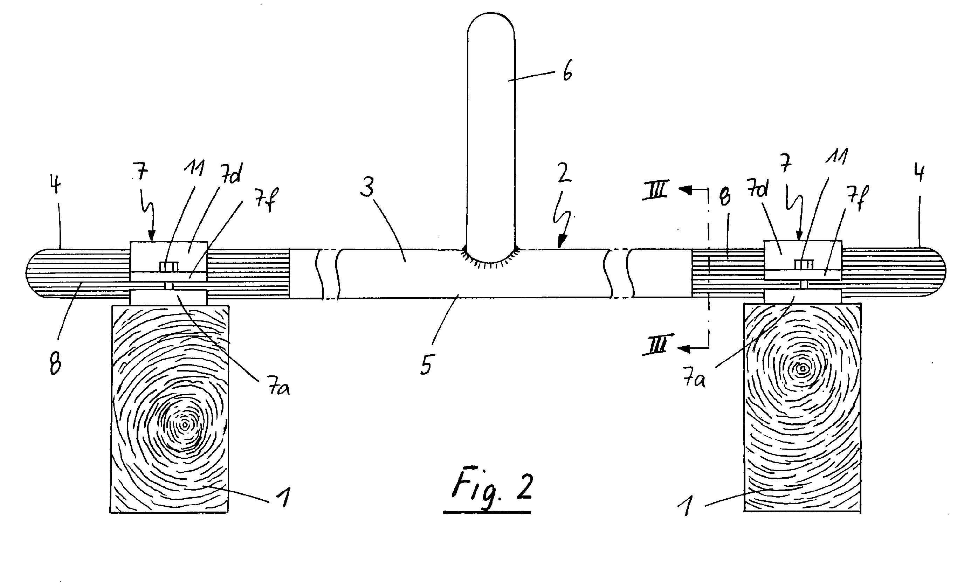

Nach den Fig. 1 und 2 sind folgende - einem Bausatz entstammenden - Bestandteile funktionsgerecht zu einem Dachantennenhalter auf zwei Dachsparren montiert: Eine sich vom Dachsparren 1 zum benachbarten Dachsparren 1 erstreckende Baueinheit 2. Diese hat etwa T-Form und beinhaltet zwei. Teile mit unterschiedlicher Funktion, nämlich ein linear ausgerichtetes Tragteil 3 mit freien Enden oder Endbereichen 4, welche sich an einen mittleren Bereich 5 anschließen. Am mittleren Bereich 5 ist ein Aufnahmeteil 6 für das untere freie Ende eines Antennenmastes (nicht dargestellt) rechtwinklig zum Tragteil 3 angeordnet, und zwar daran angeschweißt. Das Anschweißen führt hier zu einer starren Verbindung, die zudem unlösbar ist

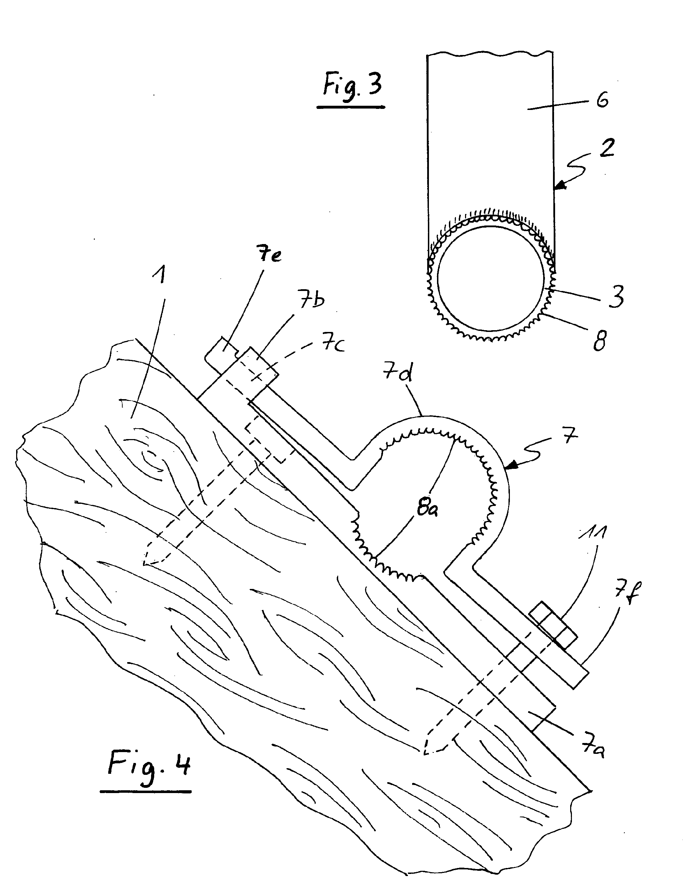

Die Baueinheit 2, genauer gesagt das Tragteil 3, ist mit seinen Endbereichen 4 von Befestigungsteilen gehalten. Letztere sind als schellenartige Auflagerteile 7 ausgebildet (vgl. Fig. 4) und an die Dachsparren 1 angeschraubt. Die Endbereiche 4 weisen an ihrer Außenseite eine in Längsrichtung verlaufende Riffelung 8 auf (vgl. auch Fig. 3).

Im noch nicht voll angezogenen Zustand der Auflagerteile 7 lässt sich die Baueinheit 2 sowohl in Richtung des Doppelpfeils 9 in Längsrichtung verschieben als auch in Richtung des Doppelpfeils 10 um die Längsachse der Baueinheit 2 bzw. des Tragteils 3 drehen. Damit lässt sich die Ausrichtung der Antenne und deren Durchdringungspunkt durch das Dach festlegen. Eine dauerhafte Fixierung wird anschließend durch ein Verspannen der Endbereiche 4 in den Auflagerteilen 7 erreicht.

Die Fig. 4 lässt ein Auflagerteil 7 erkennen, welches in einfacher Weise auf einem Dachsparren 1 angebracht und mit einem Endbereich 4 des Tragteils 3 verspannt werden kann. Dazu besteht das Auflagerteil 7 aus einer flachen Auflagerplatte 7a mit einem aufwärts gerichteten Endstück 7b samt einer Aussparung 7c. In die Aussparung 7c greift eine Schelle 7d mit einem abgewinkelten Ende 7e ein, so dass die Schelle 7d ähnlich einem Gelenk gehalten ist und auf- und abwärts bewegt werden kann.

Diese Beweglichkeit wird dazu ausgenutzt, einen Endbereich 4 zwischen Auflagerplatte 7a und Schelle 7d einzuspannen. Dazu wird die Schelle 7d an ihrem freien Ende 7f mittels einer Schraube 11 gegen die Auflagerplatte 7a angezogen. Im vorliegenden Falle ist die Schraube 11 gleichzeitig als Befestigungsschraube für die Auflagerplatte 7a vorgesehen, weshalb eine Holzschraube gewählt ist und diese die Auflagerplatte 7a frei durchdringt. Dabei wird die Schelle 7d gegen den Endbereich 4 und dieser gegen die Auflagerplatte 7a angepresst.

Schließlich verfügt das Auflagerteil 7 an seiner Innenseite über eine der Riffelung 8 der Endbereiche 4 entsprechende Riffelung 8a, und zwar sowohl an der Auflagerplatte 7a als auch an der Schelle 7d. Damit kommt es im montierten Zustand zu einem weitgehenden oder umfassenden Formschluss, welcher weder eine Längsverschiebung noch eine Drehung der Baueinheit 2 mehr zulässt.

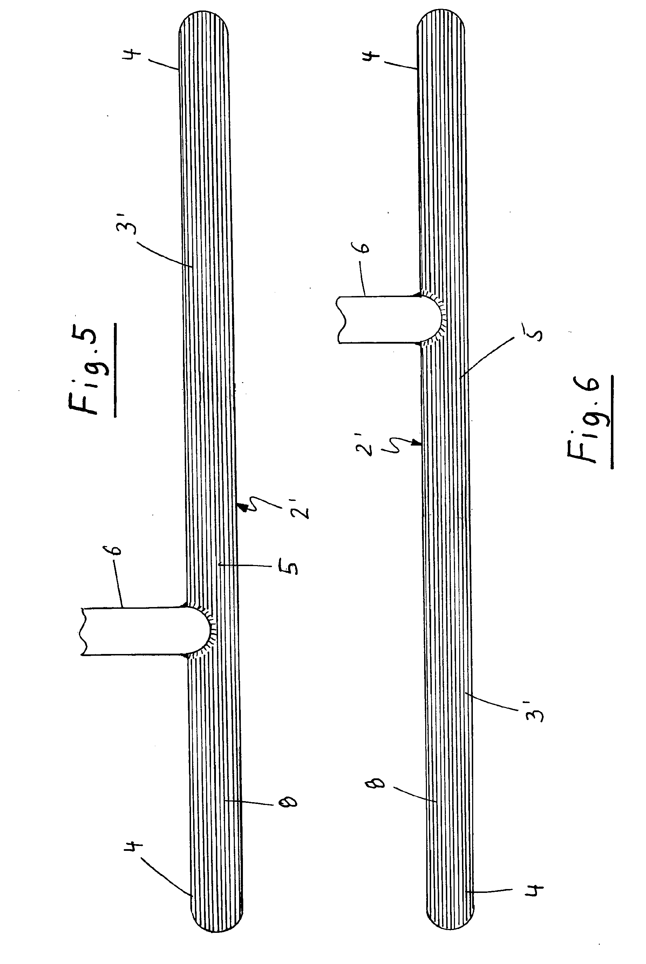

Die Fig. 5 und 6 zeigen noch etwas anders ausgebildete Baueinheiten 2a, welche aus unterschiedlichen Rundrohren gebildet sind, nämlich aus einem Rohrabschnitt mit geriffelter Oberfläche (für das Tragteil 3') und einem rechtwinklig dazu angeordneten Rohrabschnitt mit glatter Oberfläche (für das Aufnahmeteil 6'). Eine weitere Besonderheit besteht darin, dass in beiden Fällen das Aufnahmeteil 6' außermittig auf dem Tragteil 3' angeordnet ist, nämlich nach links (Fig. 5) bzw. nach rechts (Fig. 6). Damit wird dem Umstand Rechnung getragen, dass ein Durchdringungspunkt genau in der Mitte zwischen zwei Dachsparren sozusagen einen Idealfall darstellt, jedenfalls nur selten vorkommt. Dagegen kommt es häufiger vor, dass entweder in der linken oder der rechten Hälfte geeignete Durchdringungspunkte zu suchen sind. Bei einer Anordnung des Aufnahmeteils in der Mitte des Tragteils kann dies bedeuten, dass ein Endbereich übermäßig vorsteht und der andere Endbereich u. U. nicht mehr ganz vom Auflagerteil erfasst wird. Dies kann mit einer Ausführungsform gemäß Fig. 5 und 6 vermieden werden. Dabei handelt es sich sogar nur um eine einzige Ausführungsform, da die Baueinheit gemäß Fig. 5 durch Drehung um 180° in die Position von Fig. 6 zu überführen ist und umgekehrt.

Die mit vorstehender Erfindung vorgeschlagene Baueinheit 2 aus Tragteil 3 und Aufnahmeteil 6 weist keinerlei Überstände in Richtung der Dachhaut auf und ermöglicht es damit, den Gedanken einer Aufdachkonstruktion am konsequentesten zu verwirklichen.

Die vorstehend angegebenen Bestandteile sind als Eisenteile ausgeführt und zum Schutz vor Korrosion verzinkt. Die Verwendung eines metallischen Werkstoffes ist jedoch keinesfalls zwingend. In Betracht kommen insbesondere auch Verbundwerkstoffe, welche über vergleichbare mechanische Eigenschaften verfügen, in der Regel jedoch ein geringeres Gewicht erreichen:

Wie sich aus Vorstehendem ergibt, besitzt ein erfindungsgemäßer Dachantennenhalter grundsätzliche Vorteile gegenüber bekannten Ausführungsformen. Er eignet sich damit nicht nur zur Halterung von Antennen mit größerer Windangriffsfläche, wie Satellitenantennen, sondern auch von sonstigen, der Windkraft ausgesetzten Dachaufbauten, wie Windrädern, Fahnen o. Ä.

### Bezugszeichenliste

- 1: Dachsparren
- 2, 2': Baueinheit
- 3, 3': Tragteil
- 4: Ende, Endbereich
- 5: mittlerer Bereich
- 6: Aufnahmeteil
- 7: Auflagerteil, Befestigungsteil
- 7a: Auflagerplatte
- 7b: Endstück
- 7c: Aussparung
- 7d: Schelle
- 7e: abgewinkeltes Ende
- 7f: freies Ende
- 8: Riffelung
- 8a: Riffelung
- 9: Doppelpfeil
- 10: Doppelpfeil
- 11: Schraube

## Patentansprüche

1. Bausatz für einen Dachantennenhalter mit einem auf zwei benachbarten Dachsparren (1) anbringbaren Tragteil 3() sowie einem mit dem Tragteil (3) zusammenwirkenden Aufnahmeteil (6) für das untere Ende eines Antennenmastes, **dadurch gekennzeichnet, dass** das Aufnahmeteil (6) im mittleren Bereich (5) des Tragteils (3) im rechten Winkel dazu angeordnet und mit dem Tragteil (3) zu einer Baueinheit (2) starr verbunden ist und dass die beiden Endbereiche (4) der Baueinheit (2), welche als Tragteil (3) dienen, im Wesentlichen als Rohr oder Stange mit rundem Querschnitt ausgebildet sind, wobei ihnen als Befestigungsteile Schellen oder schellenartige Auflagerteile (7) zugeordnet sind, welche bei einer Lockerung eine Längsverschiebung und/oder Drehung der Baueinheit (2) zulassen.

2. Bausatz nach Anspruch 1, **dadurch gekennzeichnet, dass** das Aufnahmeteil (6) außermittig am Tragteil (3'), nämlich mit unterschiedlichem Abstand zu dessen Enden (4), angeordnet ist.

3. Bausatz nach Anspruch 1 oder 2, **dadurch gekennzeichnet, dass** das Aufnahmeteil (6) an das Tragteil (3, 3') angeschweißt ist.

4. Bausatz nach einem der Ansprüche 1 bis 3, **dadurch gekennzeichnet, dass** das Aufnahmeteil (6) ein Zapfen, Rohrabschnitt oder Zylinder ist, mit dem eine Antenne mit ihrem unteren Ende verbindbar ist.

5. Bausatz nach einem der Ansprüche 1 bis 4, **dadurch gekennzeichnet, dass** mindestens ein Endbereich (4) der Baueinheit (2), welcher als Tragteil (3, 3') dient, eine in Längsrichtung verlaufende Riffelung, Rändelung oder Zahnung (8) an der Außenseite aufweist und dass das zugeordnete Befestigungsteil (7) über eine komplementäre Riffelung, Rändelung oder Zahnung (8a) an der Innenseite verfügt.

6. Bausatz nach einem der Ansprüche 1 bis 5, **dadurch gekennzeichnet, dass** die Baueinheit (2) hohl ausgebildet ist, wobei das Tragteil (3, 3') und das Aufnahmeteil (6) an ihren Enden geschlossen sind.

7. Bausatz nach Anspruch 6, **dadurch gekennzeichnet, dass** die geschlossenen Enden der Baueinheit (2) in etwa die Form von Kugelkalotten aufweisen.

8. Bausatz nach einem der Ansprüche 1 bis 7, **dadurch gekennzeichnet, dass** die Bestandteile (7, 4) des Bausatzes (2) aus Metall bestehen und verzinkt sind.
